# EUROPÄISCHE PATENTSCHRIFT

(11) **EP 1 362 761 B1**
(45) Veröffentlichungstag und Bekanntmachung des Hinweises auf die Patenterteilung: **04.07.2007**
(21) Anmeldenummer: 03010041.6
(22) Anmeldetag: 02.05.2003
(51) Int. Cl.: B62B 3/06

(54) **Niederhub-Flurförderzeug**
Low-lifting industrial truck
Chariot de manutention à petite hauteur de levage

(30) Priorität: 14.05.2002 DE 10221311
(43) Veröffentlichungstag der Anmeldung: 19.11.2003
(73) Patentinhaber: Jungheinrich Aktiengesellschaft, 22047 Hamburg (DE)
(72) Erfinder: Lohmann, Helmut, 27404 Gyhum Nartum (DE)
(74) Vertreter: Hauck Patent- und Rechtsanwälte

(56) Entgegenhaltungen:
- DE-A1- 2 318 048
- DE-B- 1 210 537
- FR-A- 1 366 002

## Beschreibung

Die Erfindung bezieht sich auf ein Niederhub-Flurförderzeug nach dem Oberbegriff des Patentanspruchs 1.

Typischerweise weist ein Niederhub-Flurförderzeug ein Antriebsteil und ein Lastteil auf. Das Antriebsteil lagert das Antriebsrad, das um eine vertikale Achse verschwenkbar gelagert und mit einer entsprechenden Lenkeinrichtung gekoppelt sein kann, beispielsweise einer Deichsel. Außerdem ist im Antriebsteil die Motorgetriebeanordnung angeordnet sowie die Hubvorrichtung für das Lastteil. Die Hubvorrichtung wird zumeist von einem oder zwei hydraulischen Hubzylindern gebildet. Das Lastteil, das normalerweise die Batterie aufnimmt für den batteriebetriebenen Elektromotor, ist mit zwei Radarmen verbunden, welche die Lastgabel bilden. Die Radarme sind am freien Ende durch Lasträder unterstützt, die ihrerseits an einer Schwinge gelagert sind. Die Schwinge wirkt zusammen mit einem Gestängegetriebe, das am anderen Ende so mit dem Antriebsteil gekoppelt ist, dass bei einer Höhenverstellung des Lastteils zugleich auch die Schwinge verstellt wird, um der Höhenbewegung der Radarme zu folgen. Das Gestängegetriebe ist zumeist als Druckstangen- oder Zugstangensystem ausgebildet. Solch ein Niederhub-Flurförderzeug ist aus der DE 2318048 (beinhaltet die Merkmale des Oberbegriffs des Anspruchs 1) bekannt.

Bei derartigen Gestängegetrieben besteht das Bestreben, eine Einstellmöglichkeit vorzusehen, um größere Fertigungstoleranzen auszugleichen. Da die Kinematik auf zwei Radarmsysteme verzweigt ist, können mit zwei Einstellmöglichkeiten die Asymmetrien ausgeglichen werden. Die endgültige Einstellung erfolgt erst nach der Montage. Ziel einer solchen Einstellung ist, die gesenkte Höhe der Radarme im Bereich der Lasträder einzuhalten. Dies ist besonders bei einer Palettenquerbefahrung nötig.

Es ist bekannt, eine Druckstangenverstellung mit Hilfe eines Exzenters vorzunehmen. Eine andere Möglichkeit besteht darin, die Anlenkung des Umlenkhebels mit Hilfe von Unterlegscheiben in der Lage zu verändern.

Die Nachteile bei den bekannten Systemen bestehen in den erhöhten Montage- und Einstellzeiten, welche bei weitem das Einsparungspotential einer gröberen Fertigung der Einzelteile übersteigt. Außerdem kann nicht mehr der volle Zylinderhub ausgenutzt werden.

Der Erfindung liegt die Aufgabe zugrunde, ein Niederhubflurförderzeug zu schaffen, bei dem Einstellarbeiten für die Radarmkinematiken wegfallen und gleichwohl ein voller Hub des Hubzylinders erhalten wird.

Diese Aufgabe wird durch die Merkmale des Patentanspruchs 1 gelöst.

Bei der Erfindung ist ein Lagerbauteil am oberen Ende des Hubzylinders angelenkt, das mittels einer Schraubverbindung mit dem Lastteil verbunden ist, wobei die Schraubverbindung so ausgeführt ist, dass sie im gelösten Zustand eine begrenzte Relativverschiebung zwischen Lagerbauteil und Lastteil ermöglicht.

Vorteilhafterweise ist die Schwinge mit einer Anschlagfläche versehen, die mit der Unterseite des Lastarms zusammenwirkt. In der gesenkten Höhe der Radarme liegt die Schwinge am Anschlag an. Der Hubzylinder stützt sich am Antriebsteil ab. Durch eine Relativeinstellung zwischen dem Lagerbauteil und dem Lastteil lässt sich mithin beim Anschlag der Lastradschwinge bzw. bei Erreichen des Lastrades in der unteren Position ein entsprechender Ausgleich vornehmen, bevor die Schraubverbindung angezogen wird. Vorzugsweise ist die Schraubverbindung zur kraftschlüssigen Übertragung der Hubkräfte ausgerichtet.

Nach einer Ausgestaltung der Erfindung wirkt auf die Schwinge eine Druckstange, die am anderen Ende an einen Umlenkhebel angelenkt ist, der seinerseits am Lastteil und am Antriebsteil angelenkt ist.

Nach einer weiteren Ausgestaltung der Erfindung weist die Kolbenstange des Hubzylinders nach unten und ist in einer Tasche oder dergleichen des Antriebsteils annähernd passend aufgenommen. Das Bauteil ist an einem endseitigen Auge des Hubzylindermantels angelenkt.

Vorzugsweise ist das Lagerbauteil ein winkliges Bauteil, das mit dem einen Schenkel auf einer Seite des Hubzylinders angelenkt ist und mit dem anderen Schenkel gegen eine Anlagefläche des Lastteils anliegt. Vorzugsweise weist dieser Schenkel, der plattenförmig ausgebildet ist, mindestens ein Langloch auf zwecks Relativverstellung zwischen dem Lagerbauteil und dem Lastteil. Letzteres weist dann eine entsprechende Gewindebohrung auf für die Aufnahme des Schraubenbolzens.

Bei dem erfindungsgemäßen Flurförderzeug wird der Hub des Hubzylinders voll ausgenutzt. Die beschriebene Einstellung des Gestängegetriebes erfolgt vorzugsweise am Ende der Hauptmontage. Danach ist keine Einstellung mehr erforderlich.

Anhand eines in einer Zeichnung dargestellten Ausführungsbeispiels wird die Erfindung nachfolgend näher erläutert.

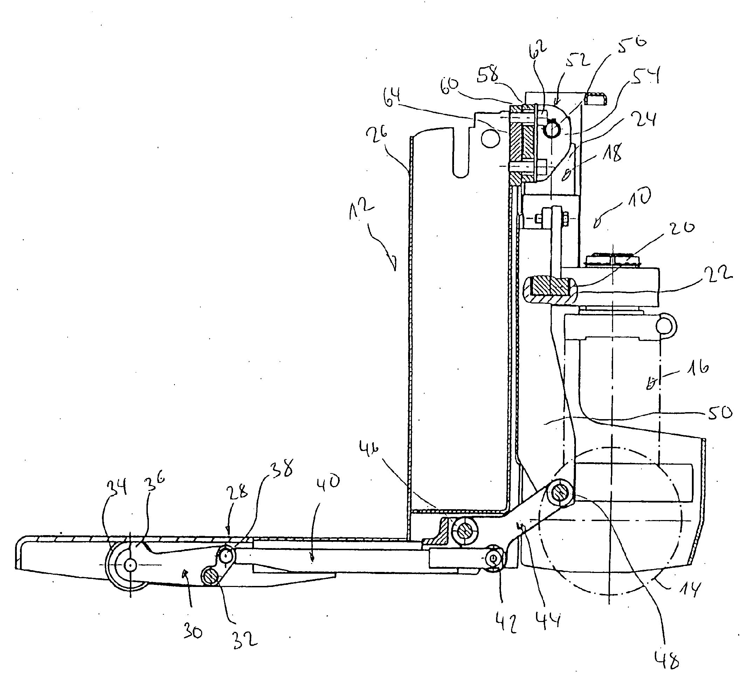

Das in der Zeichnung dargestellte Niederhub-Flurförderzeug weist ein Antriebsteil 10 und ein Lastteil 12 auf. Das Antriebsteil 10 lagert ein Antriebsrad 14 (strichpunktiert gezeichnet), das um eine vertikale Achse schwenkbar gelagert ist. Der Antrieb erfolgt über eine Motorgetriebeeinheit 16 im Antriebsteil, das zugleich einen Hydraulikzylinder 18 lagert. Der Hydraulikzylinder 18 weist eine Kolbenstange 20 auf, die in einer komplementären Ausnehmung 22 des Rahmens des Antriebsteils 10 eingeschoben ist. Der Zylindermantel 24 des Hydraulikzylinders 18 weist nach oben.

Das Lastteil 12 weist einen Kasten 26 auf für die Aufnahme einer nicht gezeigten Batterie. Am Lastteil 12 sind auch zwei Radarme angebracht, welche die Lastgabel bilden, wobei ein Radarm 28 zu erkennen ist. Innerhalb des im Querschnitt U-förmigen Radarms ist eine Schwinge 30 um einen Lagerzapfen 32 schwenkbar gelagert. Die Schwinge 30 lagert am anderen Ende ein Lastrad 34, das sich in einer Position befindet, in der es maximal zum Radarm 28 hin eingeschwenkt ist. An der Schwinge ist ein Anschlag 36 geformt, der mit der Unterseite des Radarms 28 zusammenwirkt, wie in der Zeichnung zu erkennen. Am selben Ende wie der Lagerzapfen 32 ist bei 38 eine Druckstange 40 an der Schwinge 30 angelenkt. Wird von der Druckstange 40 ein Druck nach links auf die Schwinge 30 ausgeübt, schwenkt diese entgegengesetzt der Uhrzeigerrichtung und kann mithin den Radarm 28 relativ zum Untergrund anheben.

Die Druckstange 40 ist am anderen Ende bei 42 an einem Umlenkhebel 44 angelenkt, der bei 46 am Lastteil 12 angelenkt ist. Ein weiterer Arm des Umlenkhebels 44 ist bei 48 an einer Wange 50 des Antriebsteils 10 am unteren Ende angelenkt. Es versteht sich, dass die beschriebene Kinematik auch für den zweiten Radarm gleichermaßen gilt. Wird das Lastteil 12 angehoben, verschwenkt es den Umlenkhebel 44 in Uhrzeigerrichtung und drückt mithin die Druckstange gegen die Schwinge 30, die dann entgegengesetzt der Uhrzeigerrichtung das Lastrad 34 ausschwenkt.

Der Hub des Lastteils 12 wird verursacht durch den Hydraulikzylinder 18, der an einem nicht zu erkennenden Auge ein Lagerbauteil 52 schwenkbar lagert. Das Lagerbauteil 42 weist einen ersten plattenförmigen Schenkel 54 auf, der sich seitlich zum Zylindermantel 24 erstreckt und über einen Lagerbolzen 56 an dem Zylinder 18 angelenkt ist. Ein senkrecht dazu sich erstreckender Schenkel 58 weist zwei senkrecht übereinanderstehende Langlöcher 60 auf, durch welche sich Einstellschraubenbolzen 62 erstrecken. Die Schraubenbolzen sind in Gewindebohrungen eines verstärkten plattenförmigen Abschnitts 64 eingeschraubt, der am oberen rückseitigen Ende des Kastens 26 vorgesehen ist. Wird der hydraulische Zylinder 18 ausgefahren, wird das Lastteil 12 mit den Radarmen 28 angehoben. Gleichzeitig erfolgt, wie beschrieben, das Absenken bzw. Ausschwenken der Schwinge 30.

Es versteht sich, dass ein weiteres Lagerbauteil 52 auf der gegenüberliegenden Seite des Zylinders 18 angeordnet und in ähnlicher Weise mit dem Kasten 26 verbunden sein kann.

Die Einstellung der Hubkinematik erfolgt derart, dass die Schwinge 30 mit ihrem Anschlag 36 mit dem Radarm 28 zur Anlage gebracht wird. Hierbei soll die Kolbenstange 20 im eingefahrenen Zustand auf dem Boden der Ausnehmung 22 aufsitzen. Ist dies der Fall, werden die Schraubenbolzen 62 angezogen, und zwischen dem Zylinder 18 und dem Lastteil 12 liegt eine kraftschlüssige Verbindung vor zwecks Übertragung der Hubkräfte auf das Lastteil 12.

## Patentansprüche

1. Niederhub-Flurförderzeug, bei dem in einem Antriebsteil (10) ein Antriebsrad (14) sowie ein Antriebsmotor (16) für das Antriebsrad gelagert sind und eine Lenkeinrichtung für das um eine vertikale Achse schwenkbare Antriebsrad und mindestens ein Hubzylinder (18) angeordnet sind, bei dem ferner an einem Lastteil zwei parallele Radarme (28) angebracht sind, die am vorderen Ende jeweils ein Lastrad (34) aufweisen, das seinerseits in einer Schwinge (30) gelagert ist, wobei der Hubzylinder am Lastteil (12) angreift und zwischen Antriebsteil (10) und der Schwinge (30) ein Gestängegetriebe (40) angeordnet ist, das nach Maßgabe eines Hubwegs des Lastteils die Schwinge (30) und damit die Lasträder (34) gegenüber den Radarmen (28) in der Höhe verstellt, **dadurch gekennzeichnet, dass** ein Lagerbauteil (52) am oberen Ende des Hubzylinders (18) angelenkt ist, das mittels einer Schraubverbindung mit dem Lastteil (12) verbunden ist, wobei die Schraubverbindung im gelösten Zustand eine begrenzte Relativverschiebung von Lagerbauteil (52) und Lastteil (12) ermöglicht.

2. Niederhub-Flurförderzeug nach Anspruch 1, **dadurch gekennzeichnet, dass** die Schwinge (30) eine Anschlagfläche (36) aufweist, die mit der Unterseite des Lastarms (28) zusammenwirkt.

3. Niederhub-Flurförderzeug nach Anspruch 1 oder 2, **dadurch gekennzeichnet, dass** auf die Schwinge (30) eine Druckstange (40) wirkt, die am anderen Ende an einem Umlenkhebel (44) angelenkt ist, der seinerseits am Lastteil (12) und am Antriebsteil (10) angelenkt ist.

4. Niederhub-Flurförderzeug nach einem der Ansprüche 1 bis 3, **dadurch gekennzeichnet, dass** die Kolbenstange (20) des Hubzylinders (18) nach unten weist und in einer Tasche (22) des Antriebsteils (10) annähernd passend aufgenommen ist und das Lagerbauteil (52) an einem endseitigen Auge des Hubzylindermantels (24) angelenkt ist.

5. Niederhub-Flurförderzeug nach einem der Ansprüche 1 bis 4, **dadurch gekennzeichnet, dass** das Lagerbauteil (52) einen Plattenabschnitt (58) aufweist, der sich annähernd quer zur Längsachse des Flurförderzeugs erstreckt und mindestens ein vertikales Langloch (60) aufweist für einen Schraubenbolzen(62), der in eine Gewindebohrung eines Anlageabschnitts (64) des Lastteils (12) einschraubbar ist.

## Claims

1. Low-lifting floor conveyor truck, in which in a driving unit (10) a driving wheel (14) as well as a driving motor (16) for the driving wheel are mounted and a steering appliance for the driving wheel, which is rotatable around a vertical axis, and at least one lifting cylinder (18) are disposed, and in which further two parallel load arms (28) are attached on a load unit, each of which being provided on the front with one load wheel (34) end which on its part is beared in a rocker arm (30), the lifting cylinder acting upon the load unit (12) and a linkage transmission (40) is disposed between the driving unit (10) and the rocker arm (30), which according to a lifting path of the lifting unit adjusts the rocker arm in height with respect to the load arms (28), and by doing this the load wheels (34) also, **characterised in that** a bearing component (52) is linked to the upper end of the lifting cylinder (18), which is connected with the load unit (12) via a screwed connection, the screwed connection in its detached state allowing for a limited relative displacement of bearing component (52) and load unit (12).

2. Low-lifting floor conveyor truck according to claim 1, **characterised in that** the rocker arm (30) is provided with a stopping face (36), which co-operates with the bottom side of the load arm (28).

3. Low-lifting floor conveyor truck according to claim 1 or 2, **characterised in that** upon the rocker arm (30) acts a push rod (40), which on its other end is linked to a reversing lever (44), which on its part is linked to the load unit (12) and to the driving unit (10).

4. Low-lifting floor conveyor truck according to one of claims 1 to 3, **characterised in that** the piston rod (20) of the lifting cylinder (18) points in the downward direction and is accommodated in a pocket (22) of the driving unit (10) in an approximately fitting manner, and that the bearing component (52) is linked to an endside eye of the lifting cylinder jacket (24).

5. Low-lifting floor conveyor truck according to one of claims 1 to 4, **characterised in that** the bearing component (52) is provided with a panel portion (58), which extends approximately in a direction transverse to the longitudinal axis of the floor conveyor truck, and is provided with at least one vertical elongated hole (60) for a screw bolt (62), which is screwable into a thread bore of a rest portion (64) of the load unit (12).

## Revendications

1. Chariot de manutention au sol à faible hauteur de levage, dans le cas duquel, dans une partie d'entraînement (10), une roue d'entraînement (14) ainsi qu'un moteur d'entraînement (16) pour la roue d'entraînement sont montés, et un dispositif d'orientation pour la roue d'entraînement, pouvant pivoter autour d'un axe vertical, et au moins un cylindre de levage (18) sont disposés, et de plus, dans le cas duquel, sur une partie de charge, deux bras de roue (28) sont installés, qui présentent chacun, sur leur partie avant, une roue de charge (34) qui, à son tour, est montée dans un balancier (30), le cylindre de levage attaquant la partie de charge (12) et une transmission par tiges (40) étant disposée entre la partie d'entraînement (10) et le balancier (30), cette transmission par tiges (40) positionnant en hauteur le balancier (30) et, avec lui, les roues de charge (34), proportionnellement à une course de levage de la partie de levage,
**caractérisé en ce qu'**au niveau de la partie supérieure du cylindre de levage (18), s'articule une pièce constitutive de palier (52), qui est reliée, au moyen d'une fixation par vis, à la partie de charge (12), la fixation par vis permettant, en état d'ouverture, un décalage relatif limité entre la pièce constitutive de palier (52) et la partie de charge (12).

2. Chariot de manutention au sol à faible hauteur de levage suivant la revendication 1, **caractérisé en ce que** le balancier (30) présente une surface de butée (36) qui agit en coordination avec la face inférieure du bras de charge (28).

3. Chariot de manutention au sol à faible hauteur de levage suivant la revendication 1 ou 2, **caractérisé en ce que**, sur le balancier (30), agit une tige de pression (40) qui est articulée, à son autre extrémité, sur un levier de basculement (44), qui, de son côté, s'articule sur la partie de charge (12) et sur la partie d'entraînement (10).

4. Chariot de manutention au sol à faible hauteur de levage suivant l'une des revendications 1 à 3, **caractérisé en ce que** la tige de piston (20) du cylindre de levage (18) est orientée vers le bas et est reçue dans une poche (22) de la partie d'entraînement (10) en étant sensiblement ajustée, et **en ce que** la pièce constitutive de palier (52) s'articule sur son oeil, côté extrémité, de l'enveloppe (24) du cylindre de levage.

5. Chariot de manutention au sol à faible hauteur de levage suivant l'une des revendications 1 à 4, **caractérisé en ce que** la pièce constitutive de palier (52) présente une partie de plaque (58) qui s'étend sensiblement perpendiculairement à l'axe horizontal du chariot de manutention au sol, et présente au moins un trou oblong vertical (60) pour un boulon fileté (62), qui peut être vissé dans un alésage fileté d'un élément de prolongement (64) de la partie de charge (12).
